# EUROPÄISCHE PATENTANMELDUNG

(11) **EP 2 072 856 A2**
(43) Veröffentlichungstag der Anmeldung: **24.06.2009**
(21) Anmeldenummer: 08170762.2
(22) Anmeldetag: 05.12.2008
(51) Int. Cl.: F16F 15/129

(54) **Kupplungsscheibe**

(30) Priorität: 19.12.2007 DE 102007061260; 23.04.2008 DE 102008001328; 09.07.2008 DE 102008040279
(71) Anmelder: ZF Friedrichshafen AG, 88038 Friedrichshafen (DE)
(72) Erfinder: Buer, Gerald, 97172 Mühlhausen (DE); Jeppe, Harald, 97422 Schweinfurt (DE)

(57) **Zusammenfassung**

Die Erfindung betrifft eine Kupplungsscheibe (1), insbesondere für eine Kraftfahrzeugkupplung, die ein Nabenteil (2) aufweist, wobei auf dem Nabenteil (2) eine Mitnehmerscheibe (3) angeordnet ist, die mit einem mindestens einen Reibbelag (4) tragenden Belagträger (5) verbunden ist, wobei auf dem Nabenteil (2) zwei im axialen Abstand angeordnete Seitenscheiben (6, 7) angeordnet sind, zwischen denen die Mitnehmerscheibe (3) angeordnet ist, wobei zwischen der Mitnehmerscheibe (3) und den Seitenscheiben (6, 7) mindestens ein Torsionsfederelement (8) wirksam angeordnet ist und wobei zur Leerlaufdämpfung zwischen mindestens einem der Seitenscheiben (6, 7) und der Mitnehmerscheibe (3) mindestens ein ringförmiges Reibelement (9, 10) angeordnet ist, das mit einer Stirnseite (11, 12) an einer Seitenscheibe (6, 7) und/oder an der Mitnehmerscheibe (3) anliegt. Um die Höhe der Flächenpressung gezielt einstellen zu können, mit dem das Reibelement an seinem benachbarten Bauteil anliegt, sieht die Erfindung vor, dass in mindestens eine Stirnseite (11, 12) des ringförmigen Reibelements (9, 10) mindestens eine Ausnehmung (13) eingearbeitet ist, so dass die an der Seitenscheibe (6, 7) oder an der Mitnehmerscheibe (3) reibend anliegende Kontaktfläche kleiner ist als die in Achsrichtung (a) projizierte Fläche der Stirnseite (11, 12).

## Beschreibung

Die Erfindung betrifft eine Kupplungsscheibe, insbesondere für eine Kraftfahrzeugkupplung, die ein Nabenteil aufweist, wobei auf dem Nabenteil eine Mitnehmerscheibe angeordnet ist, die mit einem mindestens einen Reibbelag tragenden Belagträger verbunden ist, wobei auf dem Nabenteil zwei im axialen Abstand angeordnete Seitenscheiben angeordnet sind, zwischen denen die Mitnehmerscheibe angeordnet ist, wobei zwischen der Mitnehmerscheibe und den Seitenscheiben mindestens ein Torsionsfederelement wirksam angeordnet ist und wobei zur Leerlaufdämpfung zwischen mindestens einem der Seitenscheiben und der Mitnehmerscheibe mindestens ein ringförmiges Reibelement angeordnet ist, das mit einer Stirnseite an einer Seitenscheibe und/oder an der Mitnehmerscheibe anliegt.

Eine gattungsgemäße Kupplungsscheibe ist in der DE 32 18 955 A1 offenbart. Bei derartigen Kupplungsscheiben wird angestrebt, dass insbesondere im Leerlauf die Schwingungsanregung gedämpft wird. Hierfür ist ein Leerlaufdämpfungssystem vorgesehen, bei dem zwei ringförmige Reibelemente zwischen der Mitnehmerscheibe und den Seitenscheiben angeordnet sind. Aufgrund einer axialen Vorspannung der Reibelemente mittels eines Federelements (bei der genannten Lösung in Form einer gewellten Federscheibe) kommt es zum Reibschluss zwischen der Mitnehmerscheibe und den Seitenscheibe, wodurch in gewünschter Weise die Schwingungsanregung gedämpft wird.

Zur Leerlaufdämpfung ist also eine Reibeinrichtung parallel zum Torsionsfedersystem wirksam. Da im Leerlauf die benötigten Reibmomente sehr niedrig sind und die Bauteile aufgrund der Handhabbarkeit und auch aus Stabilitätsgründen nicht beliebig verkleinert werden können, ist die vorliegende Flächenpressung zwischen den ringförmigen Reibelementen und der Mitnehmerscheibe bzw. den Seitenscheiben nachteilig so niedrig, dass es schwer ist, ein definiertes Reibmoment einzustellen.

Der Erfindung liegt daher die **Aufgabe** zugrunde, eine Kupplungsscheibe der eingangs genannten Art so fortzubilden, dass es in einfacher Weise möglich wird, die Höhe der Flächenpressung zwischen den ringförmigen Reibelementen und der Mitnehmerscheibe bzw. den Seitenscheiben gezielt einstellen zu können.

Die **Lösung** dieser Aufgabe durch die Erfindung ist dadurch gekennzeichnet, dass in mindestens eine Stirnseite des ringförmigen Reibelements mindestens eine Ausnehmung eingearbeitet ist, so dass die an der Seitenscheibe oder an der Mitnehmerscheibe reibend anliegende Kontaktfläche kleiner ist als die in Achsrichtung projizierte Fläche der Stirnseite.

Es ist also vorgesehen, dass - in Achsrichtung betrachtet - die Projektionsfläche des ringförmigen Reibelements größer ist, als die Kontaktfläche, die reibend an ihrem Reibpartner anliegt.

Dabei sieht eine erste Fortbildung vor, dass je ein ringförmiges Reibelement zwischen jeder Seitenscheibe und der Mitnehmerscheibe angeordnet ist.

Das ringförmige Reibelement kann auf jeder der beiden Stirnseiten mit mindestens einer Ausnehmung versehen sein.

Für die Gestaltung der Ausnehmungen sind vielfältige Möglichkeiten gegeben.

Eine erste Ausführungsform sieht vor, dass die Ausnehmung als konzentrisch zur Drehachse der Kupplungsscheibe verlaufende Nut ausgebildet ist. Die Nut kann dabei im Radialschnitt eine rechteckige Form aufweisen.

Eine alternative Ausgestaltung sieht vor, dass eine Anzahl Ausnehmungen als taschenförmige Vertiefungen ausgebildet sind. Diese taschenförmigen Vertiefungen können rechteckförmig oder quadratisch, trapezförmig oder rautenförmig ausgebildet sein. Sie können im Radialschnitt eine rechteckige Form aufweisen. Ferner kann vorgesehen sein, dass in beiden Stirnseiten Vertiefungen eingearbeitet sind, wobei diese auf den beiden Stirnseiten unterschiedlich groß ausgebildet sind.

Eine weitere alternative Ausgestaltung sieht vor, dass eine Anzahl Ausnehmungen als kreisförmige Vertiefungen ausgebildet sind.

Die Ausnehmungen können dabei das ringförmige Reibelement vollständig in Achsrichtung durchsetzen.

Um auch bei zunehmendem Verschleiß des Reibelements den gewünschten Effekt nicht einzubüßen, sieht eine Weiterbildung vor, dass die Tiefe der mindestens einen Ausnehmung größer ist als die zu erwartende maximale Verschleißdicke des Reibelements.

Das ringförmige Reibelement kann auch nur einseitig mit mindestens einer Ausnehmung versehen sein, wobei es mit Mitteln zur Verhinderung einer Relativdrehung zu einem angrenzenden Bauteil versehen ist.

Weiter ist zumeist in vorteilhafter Weise vorgesehen, dass ein in Achsrichtung wirkendes Federelement zwischen einem ringförmigen Reibelement und einer Seitenscheibe bzw. der Mitnehmerscheibe angeordnet ist. Bei dem Federelement kann es sich beispielsweise um eine gewellte Feder oder um eine Tellerfeder handeln.

Das ringförmige Reibelement hat im einfachsten Falle im Radialschnitt eine rechteckige Form.

Ein gewisses grundsätzliches Problem bei Reibeinrichtungen von Torsionsdämpfern ist allerdings der Kraftabfall des Federelements, das die Axialkraft erzeugt, im Falle der Einbaulagenvergrößerung durch Reibringverschleiß. Um diesen Kraftabfall zumindest teilweise zu kompensieren, werden die nachfolgenden speziellen Ausgestaltungen der ringförmigen Reibelemente vorgeschlagen. Diese haben die vorteilhafte Eigenschaft, durch den gewählten Radialschnitt (Querschnitt) bei Verschleiß den effektiv wirkenden Reibradius zu vergrößern und so die verschleißbedingt abfallende Axialkraft zu kompensieren.

Demgemäß ist gemäß einer Ausführungsform der Erfindung vorgesehen, dass das ringförmige Reibelement im Radialschnitt im radial innen liegenden Bereich eine rechteckige Form aufweist, an den sich radial außen liegend ein Bereich mit Trapezform anschließt. Die Stirnseite des trapezförmig ausgeführten Bereichs muss nicht zwingend linear sein; es ist auch eine bogenförmige bzw. konvexe Ausgestaltung möglich.

Eine weitere Möglichkeit der Ausbildung des ringförmigen Reibelements besteht darin, dass sich an den radial äußeren Bereich radial noch weiter außen liegend ein weiterer Bereich mit rechteckiger Form anschließt.

Das ringförmige Reibelement kann im Radialschnitt im radial innen liegenden Bereich auch eine rechteckige Form aufweisen, an den sich radial außen liegend ein Bereich mit trapezartiger Form und mit konvexer bzw. bogenförmiger Außenfläche anschließt. Ferner sieht eine andere Ausführungsform vor, dass sich an den radial innen liegenden Bereich radial noch weiter innen liegend ein weiterer Bereich mit rechteckiger Form, jedoch mit geringerer Dicke in Achsrichtung anschließt. Der axial dünnere Bereich dient der Zentrierung und ist in axiale Richtung gemessen dünner, als es dem maximal zu erwartenden Verschleiß entspricht.

Das ringförmige Reibelement kann ferner im Radialschnitt im radial innen liegenden Bereich eine rechteckige Form aufweisen, an den sich radial außenliegend ein Bereich mit rechteckiger Form mit geringerer Dicke in Achsrichtung anschließt. Dabei kann weiter vorgesehen werden, dass sich wieder an den radial innen liegenden Bereich radial noch weiter innen liegend zwecks Zentrierung ein weiterer Bereich mit rechteckiger Form, jedoch mit geringerer Dicke in Achsrichtung anschließt.

Zu den Größenverhältnissen der Reibelemente hinsichtlich der Ausbildung der reibenden und nicht reibenden Flächenanteile der Stirnseiten der Elemente sowie zu den axialen Dicken dieser Bereiche sei folgendes angemerkt:

Bevorzugt beträgt die in Achsrichtung projizierte Fläche der Stirnseite des Reibelements 150 % bis 250 % der reibend an der Mitnehmerscheibe anliegenden Kontaktfläche. Dabei ist besonders bevorzugt ein Wertebereich zwischen 170 % und 200 % vorgesehen. Das Verhältnis der projizierten Fläche zur Kontaktfläche kann auf beiden Stirnseiten des Reibelements gleich groß oder unterschiedlich groß sein.

Die in axiale Richtung gemessene Dicke des Reibelements im Bereich der reibend an der Mitnehmerscheibe anliegenden Kontaktfläche beträgt bevorzugt 110 % bis 250 % der in axiale Richtung gemessenen Dicke des Reibelements im Bereich der nicht reibend an der Mitnehmerscheibe anliegenden Kontaktfläche; dabei ist besonders bevorzugt ein Wertebereich zwischen 110 % und 150 % vorgesehen.

Das vorgeschlagene System hat den Vorteil, dass bei gleichen Hauptabmessungen die reibende Fläche gezielt verkleinert und somit die sich ergebende Flächenpressung gezielt auf einen optimalen Wert eingestellt werden kann. In die reibende Oberfläche werden hierzu gezielt Vertiefungen eingebracht. Diese sind bevorzugt so tief, dass auch bei dem zu erwartenden Laufzeitende diese nicht durch Verschleiß der reibenden Flächen des Reibelements egalisiert (d. h. eingeebnet) werden.

Die Form der Vertiefungen kann - wie gezeigt - vielfältig sein. Die Vertiefungen sind auch nur einseitig am Reibelement möglich, wobei dann die gegenüberliegende Seite verdrehfest, aber axial verschiebbar mit dem anderen an der Reibung beteiligten Bauteil verbunden ist. Damit wird eine gezielte Einstellung der Flächenpressung realisiert.

In der Zeichnung sind Ausführungsbeispiele der Erfindung dargestellt. Es zeigen:
- Fig. 1: eine Kupplungsscheibe einer Kraftfahrzeug-Kupplung im Radialschnitt,
- Fig. 2: die Einzelheit "Z" gemäß Fig. 1,
- Fig. 3: ein ringförmiges Reibelement der Kupplungsscheibe in Achsrichtung gesehen,
- Fig. 4: das Reibelement im Schnitt A-A gemäß Fig. 3,
- Fig. 5: eine alternative Ausbildung des Reibelements in der Darstellung gemäß Fig. 3,
- Fig. 6: das Reibelement im Schnitt A-A gemäß Fig. 5,
- Fig. 7: eine perspektivische Darstellung des Reibelements gemäß der Figuren 5 und 6,
- Fig. 8: eine weitere alternative Ausbildung des Reibelements in der Darstellung gemäß Fig. 3,
- Fig. 9: das Reibelement gemäß Fig. 8 in der Seitenansicht,
- Fig. 10: eine weitere alternative Ausbildung des Reibelements in der Darstellung gemäß Fig. 3,
- Fig. 11: das Reibelement im Schnitt A-A gemäß Fig. 10,
- Fig. 12a bis Fig. 12d: Radialschnitte durch verschiedene Ausgestaltungen der ringförmigen Reibelemente,
- Fig. 13a bis Fig. 13d: die oberen Bereiche der in Fig. 12 dargestellten Radialschnitte in vergrößerter Darstellung,
- Fig. 14: den Radialschnitt durch eine weitere Ausgestaltung der ringförmigen Reibelemente,
- Fig. 15: eine zu Fig. 14 alternative Variante des Reibelements,
- Fig. 16: schematisch ein Reibelement in Achsrichtung betrachtet mit Kennzeichnung der projizierten Fläche desselben,
- Fig. 17: schematisch ein Reibelement in Achsrichtung betrachtet mit Kennzeichnung der reibenden und nicht reibenden Fläche desselben und
- Fig. 18: schematisch ein Reibelement im Radialschnitt.

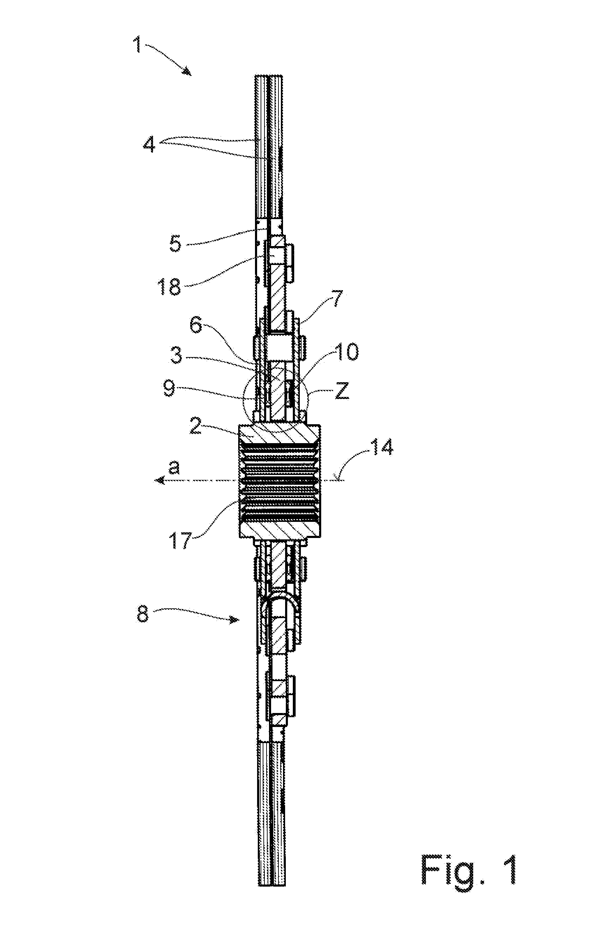

In Figur 1 ist eine Kupplungsscheibe 1 im Radialschnitt dargestellt. Die Kupplungsscheibe 1 weist ein Nabenteil 2 auf, an dem eine Mitnehmerscheibe 3 befestigt ist. Das Nabenteil 2 hat im radial inneren Bereich in bekannter Weise eine Keilverzahnung 17, mit der die Kupplungsscheibe 1 drehfest, jedoch axial verschieblich auf einer nicht dargestellten Getriebeeingangswelle festgelegt werden kann. An der Mitnehmerscheibe 3 ist ein Belagträger 5 mittels Nieten 18 befestigt. Am Belagträger 5 wiederum sind beidseitig Reibbeläge 4 befestigt.

Ansonsten weist die Kupplungsscheibe - in an sich bekannter Bauart - zwei Seitenscheiben 6 und 7 auf, wobei zwischen den Seitenscheiben 6, 7 und der Mitnehmerscheibe 3 ein Torsionsfederelement 8 wirksam angeordnet ist, um Drehschwingungen dämpfen zu können.

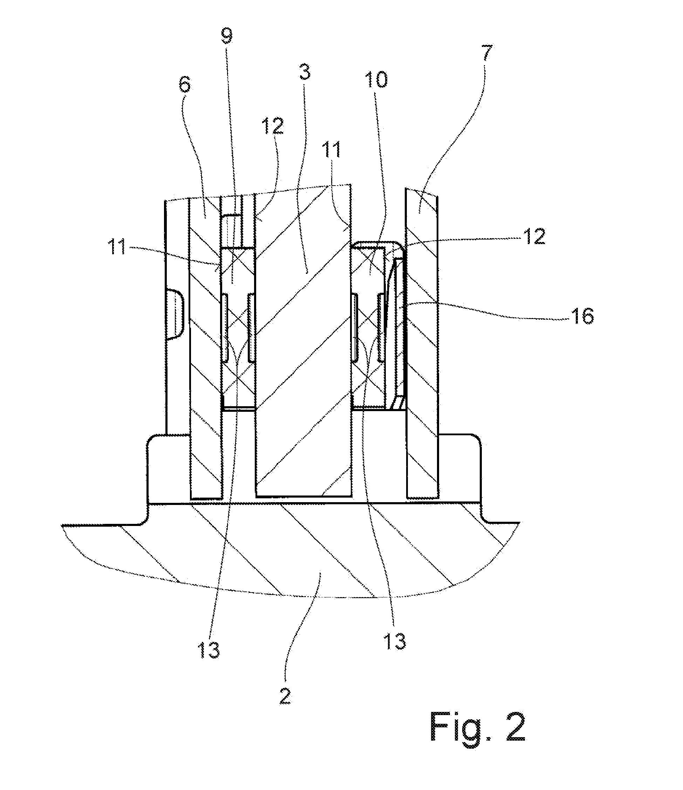

Die insoweit vorbekannte Kupplungsscheibe zeichnet sich durch ein System zur Dämpfung von Schwingungen im Leerlauf aus. Dieses umfasst - wie es am besten aus der vergrößerten Darstellung gemäß Fig. 2 zu sehen ist - zwei ringförmige Reibelemente 9 und 10, die zwischen der Seitenscheibe 6 und der Mitnehmerscheibe 3 bzw. zwischen der Mitnehmerscheibe 3 und der Seitenscheibe 7 angeordnet ist. Die ringförmigen Reibelemente 9, 10 liegen mit ihren Stirnseiten 11 bzw. 12 an den benachbarten Bauteilen 3, 6, 7 an, wobei ein Federelement 16 beispielsweise in Form einer Tellerfeder dafür sorgt, dass eine definierte Anpresskraft zwischen den Reibelementen 9, 10 und den benachbarten Bauteilen 3, 6, 7 herrscht.

Um die Größe der Flächenpressung zwischen den Reibelementen 9, 10 und den benachbarten Bauteilen 3, 6, 7 gezielt einstellen zu können, ist vorgesehen, dass in mindestens eine Stirnseite 11 bzw. 12 des ringförmigen Reibelements 9, 10 mindestens eine Ausnehmung 13 eingearbeitet ist, so dass die an der Seitenscheibe 6, 7 oder an der Mitnehmerscheibe 3 reibend anliegende Kontaktfläche kleiner ist als die in Achsrichtung a projizierte Fläche der Stirnseite 11, 12.

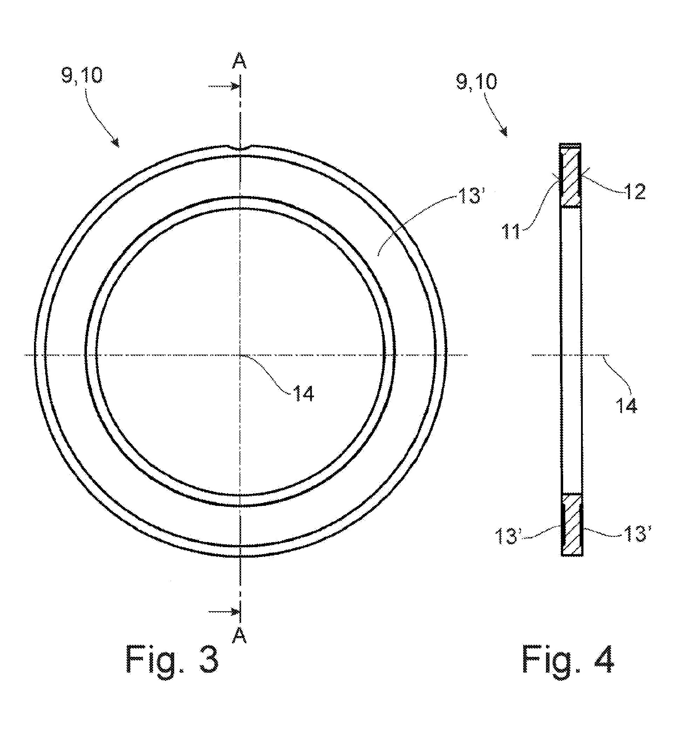

Eine diesbezüglich erste Ausgestaltung der Erfindung ist in den Figuren 3 und 4 zu sehen. Hier weisen beide Stirnseiten 11, 12 des Reibelements 9, 10 je eine konzentrisch zur Drehachse 14 der Kupplungsscheibe 1 angeordnete Ringnut 13' auf, die im Querschnitt (wie in Fig. 4 zu sehen ist) rechteckförmig ausgebildet ist.

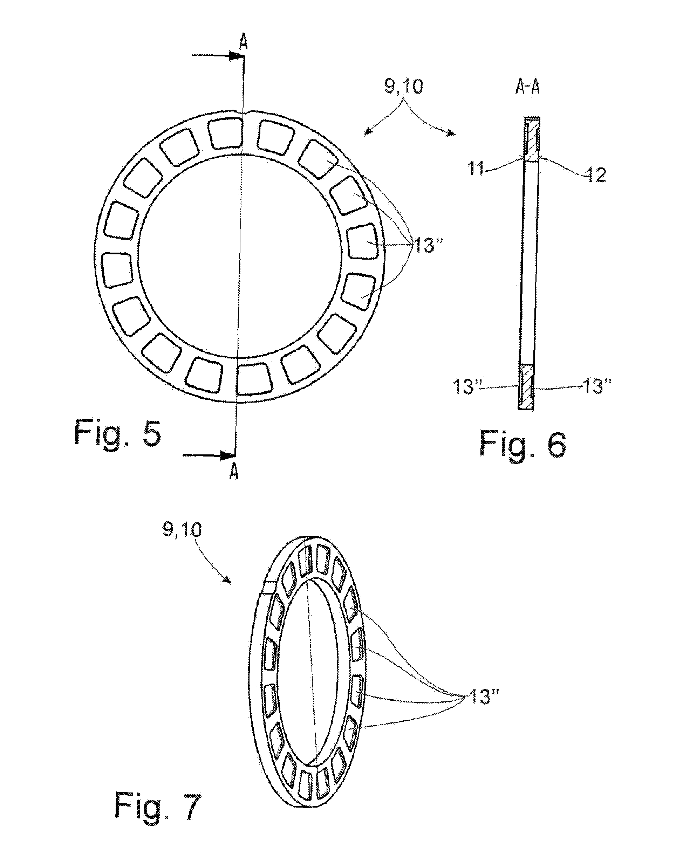

Dem gegenüber ist bei der alternativen Lösung gemäß der Figuren 5, 6 und 7 vorgesehen, dass die Ausnehmungen 13 hier die Form taschenförmiger Vertiefungen 13" aufweisen, die äquidistant in die Stirnseiten 11, 12 eingearbeitet sind. Die Ausnehmungen 13" haben hier eine rechteckförmige bzw. leicht trapezförmige Gestalt.

Fig. 6 kann entnommen werden, dass die Größe der Ausnehmungen 13" auf den beiden Stirnseiten 11 bzw. 12 nicht gleich groß sein muss. Ferner ist hier die Tiefe t der Ausnehmungen 13" eingetragen, die so groß gewählt wird, dass auch bei maximalem Verschleiß die Ausnehmungen 13" nicht eingeebnet werden und somit bis zum Laufzeitende wirksam bleiben.

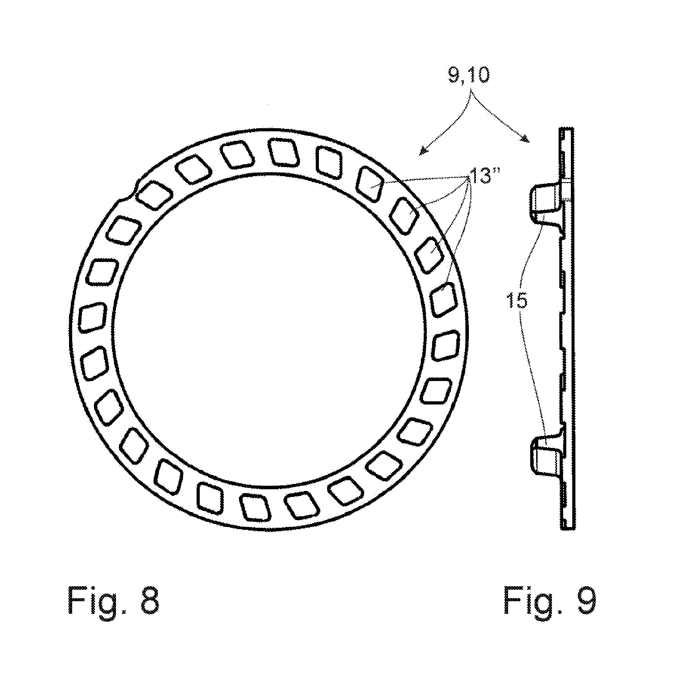

In den Figuren 8 und 9 ist eine weitere alternative Ausführungsform der Erfindung zu sehen. Hier sind die Ausnehmungen 13" rautenförmig ausgebildet. Weiterhin weist das Reibelement 9, 10 hier an einer Seite Mittel 15 zur Verhinderung einer Relativdrehung auf. Damit kann das Reibelement 9, 10 an einem angrenzenden Bauteil (nämlich an einer Seitenscheibe 6 oder 7 bzw. an der Mitnehmerscheibe 3) drehfest gelegt werden, jedoch axial (d. h. in Achsrichtung a) verschiebbar.

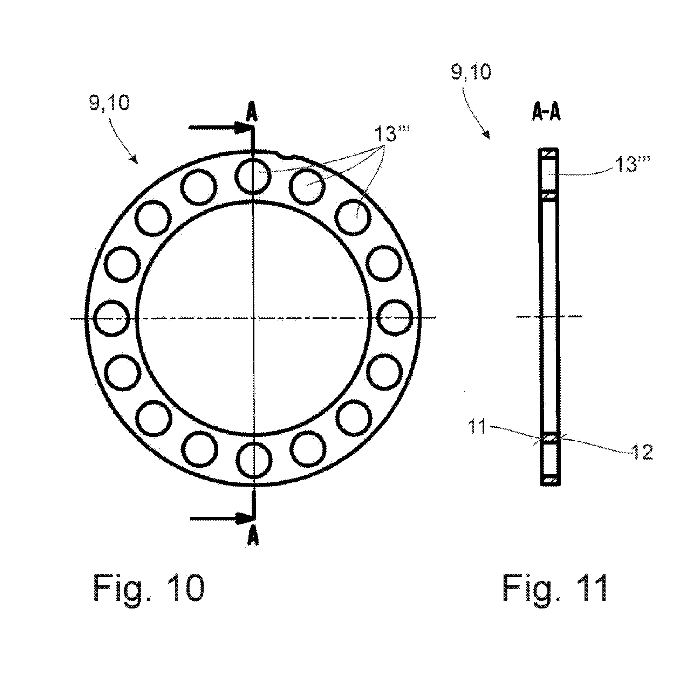

Eine weitere Alternative für die Ausführung des Reibelements 9, 10 ist in den Figuren 10 und 11 dargestellt. Hier sind die Ausnehmungen 13 in Form von kreisförmigen Vertiefungen 13''' realisiert, d. h. in Form von Bohrungen. Diese durchsetzen übrigens (wie es in Fig. 11 gesehen werden kann) das Reibelement 9, 10 vorzugsweise vollständig.

Durch all die vorgeschlagenen Maßnahmen wird erreicht, dass die effektiv am Reibpartner 3, 6, 7 anliegende Reibfläche des Reibelements 9, 10 kleiner ist als die in Achsrichtung a gegebene Projektionsfläche des Reibelements. Die Flächenpressung, mit der das Reibelement 9, 10 an seinem Reibpartner anliegt, kann damit gezielt eingestellt werden.

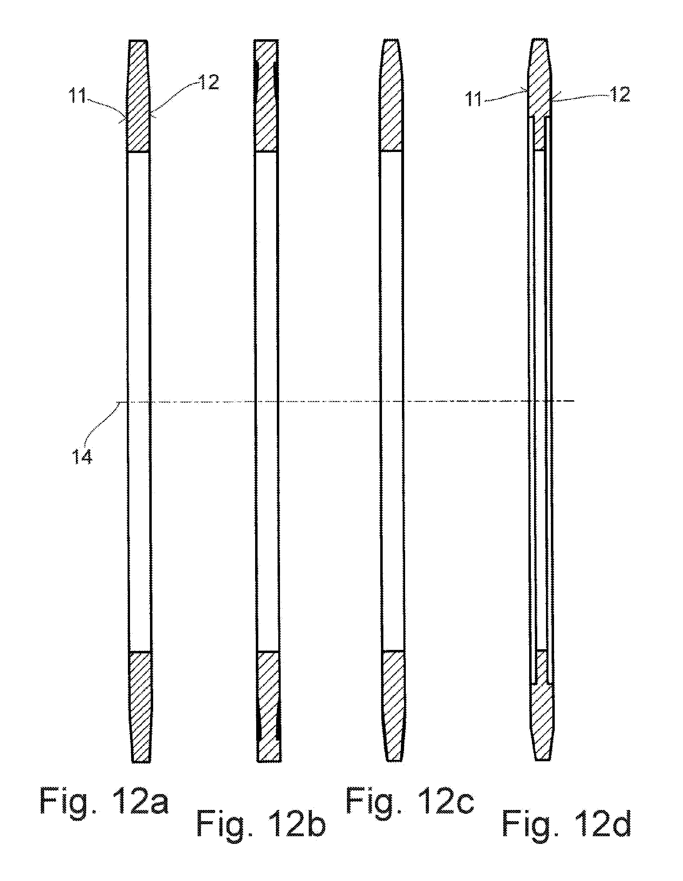

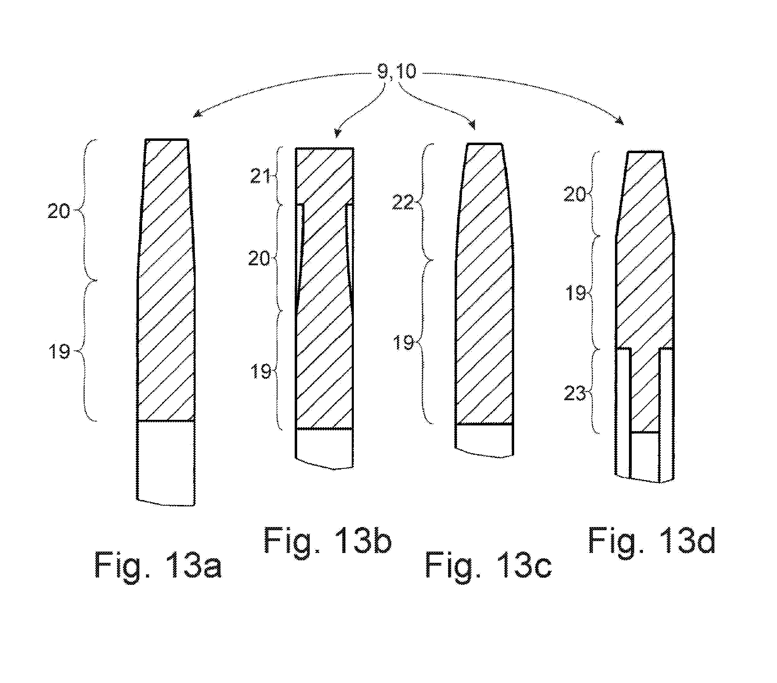

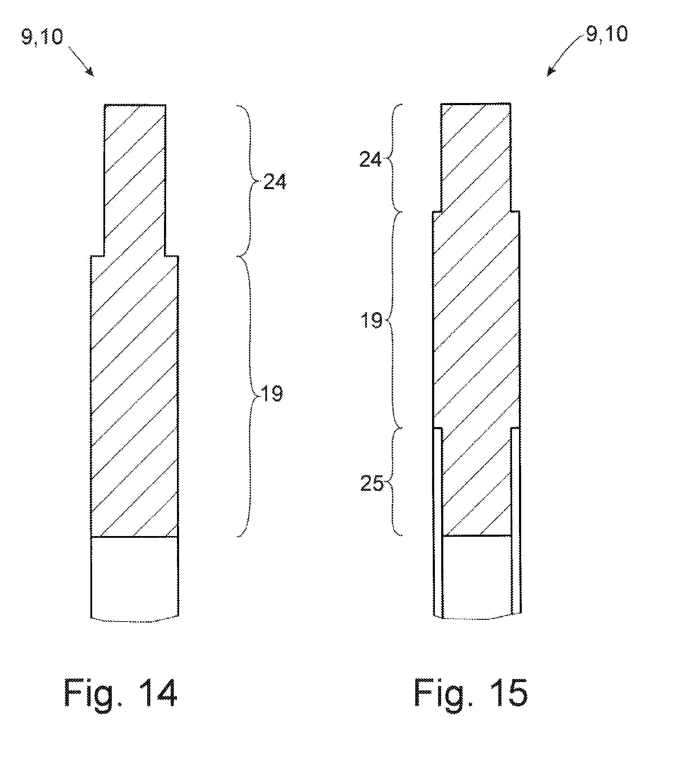

In den Figuren 12 bis 15 sind die ringförmigen Reibelemente 9 bzw. 10 noch einmal näher hinsichtlich ihrer Ausformung im Radialschnitt dargestellt. Die Lösungen nach den Figuren 12a bis 12d bzw. korrespondierend dazu nach den Figuren 13a bis 13d sowie die Lösungen nach Fig. 14 und Fig. 15 geben Maßnahmen an, wie erreicht werden kann, dass trotz verschleißbedingtem Nachlassens der auf die Reibelemente 9, 10 wirkenden axialen Federkraft das Reibmoment nicht abfällt bzw. nicht in dem Maße abfällt, wie es im Stand der Technik bekannt ist.

Bei der Lösung nach Fig. 12a bzw. 13a schließt sich an einen rechteckförmigen Radialschnitt in einem innen liegenden Bereich 19 radial weiter außen liegend ein im Radialschnitt trapezförmiger Bereich 20 an. Verschleißt das Reibelement 9, 10 an seinen Stirnseiten, kommen folglich Reibbereiche mit größerem Reibradius in Eingriff, was das übertragbare Reibmoment vergrößert.

Gemäß Fig. 12b bzw. 13b schließt sich an den Bereich 20 radial noch weiter außen liegend ein weiterer Bereich 21 an, der wieder einen rechteckförmigen Radialschnitt aufweist.

Bei der Lösung gemäß Fig. 12c bzw. 13c ist vorgesehen, dass der trapezförmig ausgebildete Bereich an der Stirnseite ballig bzw. konvex ausgeführt ist.

Das Reibelement nach Fig. 12d bzw. 13d weist radial innen liegend einen Bereich 23 mit rechteckigem Radialschnitt auf, der der Zentrierung dient, der jedoch eine geringere Dicke in Achsrichtung aufweist.

Die Lösungen gemäß der Figuren 14 und 15 setzen wiederum in verschiedenen Bereichen 19 und 24 rechteckförmige Radialschnitte unterschiedlicher Dicke ein; im Falle der Lösung gemäß Fig. 15 ist wiederum in einem radial innen liegenden Bereich 25 ein Zentrierbereich mit geringerer Dicke vorgesehen.

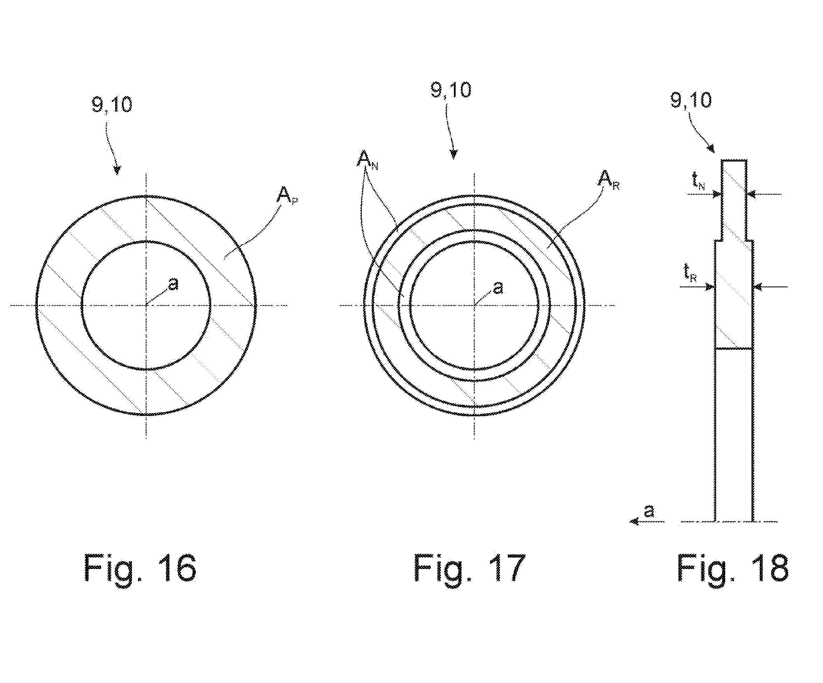

Anhand der Figuren 16 bis 18 sind die Parameter illustriert, die hinsichtlich der Ausbildung des Reibelements 9, 10 besonders relevant sind. Aus Fig. 16 geht die Projektionsfläche A_{P} des gesamten Reibelements 9, 10 - gesehen in Achsrichtung a - hervor, wobei dies für ein Reibelement 9, 10 gemäß Fig. 15 dargestellt ist. Dem gegenüber zeigt Fig. 17 für dieses Reibelement 9, 10 einmal die reibend anliegende Kontaktfläche A_{R} und dann die hierzu komplementäre nicht reibende Fläche A_{N}.

Dabei ist die Projektionsfläche A_{P} bevorzugt 1,5 bis 2,5 Mal größer als die Reibfläche A_{R}, wobei der besonders bevorzugte Wert beim Faktor 1,7 bis 2,0 liegt. Dieses Flächenverhältnis bezieht sich auf die Einbaumaße der Reibelemente, wobei dann durch auftretenden Verschleiß eine Veränderung auftreten kann; die Reibfläche wird zumeist durch Verschleiß größer.

In Fig. 18 ist für ein Reibelement, wie es in Fig. 14 gezeigt ist, dargestellt, dass die axiale Dicke t_{N} des Reibelements 9, 10 im Bereich der nicht reibenden Fläche gegenüber der axialen Dicke t_{R} des Reibelements 9, 10 im Bereich der Reibfläche zurückgesetzt ist. Die Dicke t_{R} beträgt dabei bevorzugt das 1,1- bis 2,5-fache der Dicke t_{N}. Hier liegt ein besonders bevorzugter Wert zwischen dem Faktor 1,1 und 1,5.

## Patentansprüche

1. Kupplungsscheibe (1), insbesondere für eine Kraftfahrzeugkupplung, die ein Nabenteil (2) aufweist, wobei auf dem Nabenteil (2) eine Mitnehmerscheibe (3) angeordnet ist, die mit einem mindestens einen Reibbelag (4) tragenden Belagträger (5) verbunden ist, wobei auf dem Nabenteil (2) zwei im axialen Abstand angeordnete Seitenscheiben (6, 7) angeordnet sind, zwischen denen die Mitnehmerscheibe (3) angeordnet ist, wobei zwischen der Mitnehmerscheibe (3) und den Seitenscheiben (6, 7) mindestens ein Torsionsfederelement (8) wirksam angeordnet ist und wobei zur Leerlaufdämpfung zwischen mindestens einem der Seitenscheiben (6, 7) und der Mitnehmerscheibe (3) mindestens ein ringförmiges Reibelement (9, 10) angeordnet ist, das mit einer Stirnseite (11, 12) an einer Seitenscheibe (6, 7) und/oder an der Mitnehmerscheibe (3) anliegt,
**dadurch gekennzeichnet,**
**dass** in mindestens eine Stirnseite (11, 12) des ringförmigen Reibelements (9, 10) mindestens eine Ausnehmung (13) eingearbeitet ist, so dass die an der Seitenscheibe (6, 7) oder an der Mitnehmerscheibe (3) reibend anliegende Kontaktfläche kleiner ist als die in Achsrichtung (a) projizierte Fläche der Stirnseite (11, 12).

2. Kupplungsscheibe nach Anspruch 1, **dadurch gekennzeichnet, dass** je ein ringförmiges Reibelement (9, 10) zwischen jeder Seitenscheibe (6, 7) und der Mitnehmerscheibe (3) angeordnet ist.

3. Kupplungsscheibe nach Anspruch 1 oder 2, **dadurch gekennzeichnet, dass** das ringförmige Reibelement (9, 10) auf jeder Stirnseite (11, 12) mit mindestens einer Ausnehmung (13) versehen ist.

4. Kupplungsscheibe nach einem der Ansprüche 1 bis 3, **dadurch gekennzeichnet, dass** die Ausnehmung (13) als konzentrisch zur Drehachse (14) der Kupplungsscheibe (1) verlaufende Nut (13') ausgebildet ist.

5. Kupplungsscheibe nach Anspruch 4, **dadurch gekennzeichnet, dass** die Nut (13') im Radialschnitt eine rechteckige Form aufweist.

6. Kupplungsscheibe nach einem der Ansprüche 1 bis 3, **dadurch gekennzeichnet, dass** eine Anzahl Ausnehmungen (13) als taschenförmige Vertiefungen (13") ausgebildet sind.

7. Kupplungsscheibe nach Anspruch 6, **dadurch gekennzeichnet, dass** die taschenförmigen Vertiefungen (13") rechteckförmig oder quadratisch ausgebildet sind.

8. Kupplungsscheibe nach Anspruch 6, **dadurch gekennzeichnet, dass** die taschenförmigen Vertiefungen (13") trapezförmig ausgebildet sind.

9. Kupplungsscheibe nach Anspruch 6, **dadurch gekennzeichnet, dass** die taschenförmigen Vertiefungen (13") rautenförmig ausgebildet sind.

10. Kupplungsscheibe nach einem der Ansprüche 6 bis 9, **dadurch gekennzeichnet, dass** die taschenförmigen Vertiefungen (13") im Radialschnitt eine rechteckige Form aufweist.

11. Kupplungsscheibe nach einem der Ansprüche 6 bis 10, **dadurch gekennzeichnet, dass** in beiden Stirnseiten (11, 12) Vertiefungen (13") eingearbeitet sind, wobei diese auf den beiden Stirnseiten (11, 12) unterschiedlich groß ausgebildet sind.

12. Kupplungsscheibe nach einem der Ansprüche 1 bis 3, **dadurch gekennzeichnet, dass** eine Anzahl Ausnehmungen (13) als kreisförmige Vertiefungen (13''') ausgebildet sind.

13. Kupplungsscheibe nach einem der Ansprüche 6 bis 12, **dadurch gekennzeichnet, dass** die Ausnehmungen (13) das ringförmige Reibelement (12, 13) vollständig in Achsrichtung (a) durchsetzen.

14. Kupplungsscheibe nach einem der Ansprüche 1 bis 13, **dadurch gekennzeichnet, dass** die Tiefe (t) der mindestens einen Ausnehmung (13) größer ist als die zu erwartende maximale Verschleißdicke des Reibelements (12, 13).

15. Kupplungsscheibe nach einem der Ansprüche 1 bis 14, **dadurch gekennzeichnet, dass** das ringförmige Reibelement (12, 13) nur einseitig mit mindestens einer Ausnehmung (13) versehen ist, wobei es mit Mitteln (15) zur Verhinderung einer Relativdrehung zu einem angrenzenden Bauteil versehen ist.

16. Kupplungsscheibe nach einem der Ansprüche 1 bis 15, **dadurch gekennzeichnet, dass** ein in Achsrichtung (a) wirkendes Federelement (16) zwischen einem ringförmigen Reibelement (9, 10) und einer Seitenscheibe (6, 7) bzw. der Mitnehmerscheibe (3) angeordnet ist.

17. Kupplungsscheibe nach einem der Ansprüche 1 bis 16, **dadurch gekennzeichnet, dass** das ringförmige Reibelement (9, 10) im Radialschnitt eine rechteckige Form aufweist.

18. Kupplungsscheibe nach einem der Ansprüche 1 bis 16, **dadurch gekennzeichnet, dass** das ringförmige Reibelement (9, 10) im Radialschnitt im radial innen liegenden Bereich (19) eine rechteckige Form aufweist, an den sich radial außen liegend ein Bereich (20) mit Trapezform anschließt.

19. Kupplungsscheibe nach Anspruch 18, **dadurch gekennzeichnet, dass** sich an den radial äußeren Bereich (20) radial noch weiter außen liegend ein weiterer Bereich (21) mit rechteckiger Form anschließt.

20. Kupplungsscheibe nach einem der Ansprüche 1 bis 16, **dadurch gekennzeichnet, dass** das ringförmige Reibelement (9, 10) im Radialschnitt im radial innen liegenden Bereich (19) eine rechteckige Form aufweist, an den sich radial außen liegend ein Bereich (22) mit trapezartiger Form und mit konvexer bzw. bogenförmiger Außenfläche anschließt.

21. Kupplungsscheibe nach Anspruch 18, **dadurch gekennzeichnet, dass** sich an den radial innen liegenden Bereich (19) radial noch weiter innen liegend ein weiterer Bereich (23) mit rechteckiger Form, jedoch mit geringerer Dicke in Achsrichtung (a) anschließt.

22. Kupplungsscheibe nach einem der Ansprüche 1 bis 16, **dadurch gekennzeichnet, dass** das ringförmige Reibelement (9, 10) im Radialschnitt im radial innen liegenden Bereich (19) eine rechteckige Form aufweist, an den sich radial außenliegend ein Bereich (24) mit rechteckiger Form mit geringerer Dicke in Achsrichtung (a) anschließt.

23. Kupplungsscheibe nach Anspruch 22, **dadurch gekennzeichnet, dass** sich an den radial innen liegenden Bereich (19) radial noch weiter innen liegend ein weiterer Bereich (25) mit rechteckiger Form, jedoch mit geringerer Dicke in Achsrichtung (a) anschließt.

24. Kupplungsscheibe nach einem der Ansprüche 1 bis 23, **dadurch gekennzeichnet, dass** die in Achsrichtung (a) projizierte Fläche (A_{P}) der Stirnseite (11, 12) des Reibelements (9,10) 150 % bis 250 % der reibend an der Mitnehmerscheibe (3) anliegenden Kontaktfläche (A_{R}) beträgt.

25. Kupplungsscheibe nach Anspruch 24, **dadurch gekennzeichnet, dass** die in Achsrichtung (a) projizierte Fläche (A_{P}) der Stirnseite (11, 12) des Reibelements (9,10) 170 % bis 200 % der reibend an der Mitnehmerscheibe (3) anliegenden Kontaktfläche (A_{R}) beträgt.

26. Kupplungsscheibe nach Anspruch 24 oder 25, **dadurch gekennzeichnet, dass** das Verhältnis der projizierte Fläche (A_{P}) zur Kontaktfläche (A_{R}) auf beiden Stirnseiten (11, 12) des Reibelements (9, 10) gleich groß ist.

27. Kupplungsscheibe nach Anspruch 24 oder 25, **dadurch gekennzeichnet, dass** das Verhältnis der projizierte Fläche (A_{P}) zur Kontaktfläche (A_{R}) auf beiden Stirnseiten (11, 12) des Reibelements (9, 10) unterschiedlich groß ist.

28. Kupplungsscheibe nach einem der Ansprüche 1 bis 25, **dadurch gekennzeichnet, dass** die in axiale Richtung (a) gemessene Dicke (t_{R}) des Reibelements (9,10) im Bereich der reibend an der Mitnehmerscheibe (3) anliegenden Kontaktfläche (A_{R}) 110 % bis 250 % der in axiale Richtung (a) gemessenen Dicke (t_{N}) des Reibelements (9,10) im Bereich der nicht reibend an der Mitnehmerscheibe (3) anliegenden Kontaktfläche (AN) beträgt.

29. Kupplungsscheibe nach Anspruch 28, **dadurch gekennzeichnet, dass** die in axiale Richtung (a) gemessene Dicke (t_{R}) des Reibelements (9,10) im Bereich der reibend an der Mitnehmerscheibe (3) anliegenden Kontaktfläche (A_{R}) 110 % bis 150 % der in axiale Richtung (a) gemessenen Dicke (t_{N}) des Reibelements (9,10) im Bereich der nicht reibend an der Mitnehmerscheibe (3) anliegenden Kontaktfläche (AN) beträgt.
